# EUROPEAN PATENT APPLICATION

(11) **EP 1 587 258 A2**
(43) Date of publication of application: **19.10.2005**
(21) Application number: 04386013.9
(22) Date of filing: 16.04.2004
(51) Int. Cl.: H04L 12/56

(54) **Wideband intercom and secure pocket radio (WISPR)**

(30) Priority: 16.04.2004 GR 2004100133
(71) Applicant: Intracom S.A. Hellenic Telecommunications & Electronics Industry, 19002 Peania, Athens (GR)
(72) Inventor: Antoniadis, Panagiotis, Peania, Athens (GR); Topis, Stergios, Peania, Athens (GR); Saitis, Nikolaos, Peania, Athens (GR); Potirakis, Stilianos, Peania, Athens (GR); Theodorou, Aristidis, Peania, Athens (GR); Avrasoglou, Agelos, Peania, Athens (GR); Athanasouli, Evagelia, Peania, Athens (GR); Tzanetos, Panagiotis, Peania, Athens (GR)
(74) Representative: Papataxiarchis, Panagiotis

(57) **Abstract**

The present invention relates to a Wideband Intercom and Secure Packet Radio (WISPR), a state-of-the-art digital, fully programmable communication system that provides internal and external communication to the operators of any vehicle (WISPR installation platform is not limited). WISPR includes a dedicated secure with anti-jamming capabilities radio in order to support a Wireless Local Area Network (WLAN) and is able to provide voice and data communication over radios, analog wires and data/voice over field telephones and tank telephones. Also the system supports a variety of user specified operational requirements (e.g. hierarchy plans, closed group conference, wired or wireless remote radio control, tactical data reception, independent listen / talk functions) and has the capacity for dynamic adaptation to field requirements and the potential for expansion in order to fulfill the future needs of the Armed Forces.

The WISPR system configuration is adaptable according to the type of platform to be equipped with and the particular operational requirements for the specific application. The system installation is implemented as a simple plug and play operation due to its modular design architecture. Any WISPR system configuration is expandable by the simple addition of new units without intervention in the previous hardware configuration. Additional WISPR units can be installed by direct connection to the existing bus in a serial manner.

## Description

### INVENTION BACKGROUND

The present invention pertains to the field of modern communication systems and networks, and in particular to intercom and radio communications systems. It specifically concerns a state-of-the-art, digital, fully programmable communication system, with dedicated radio unit that provides internal and external communication to the operators of platforms (e.g. vehicles, shelters, vessels etc.). The system is able to provide voice and data communication over radios, analog wires, field telephones and supports a Wireless Local Area Network (WLAN). It also has the capacity for dynamic adaptation to field requirements and the potential for expansion in order to fulfill the future needs of the Armed Forces.

From this point onwards in this document, unless specifically indicated otherwise, the terms "WISPR" shall be taken to mean Wideband Intercom and Secure Packet Radio.

Most of today's intercom systems are built to support simple audio communication among crewmembers of an operations platform. The operations supported by the intercom systems include simple information exchange, command orders, or communication with external support or command forces through the use of platform radio(s). However, modern communication requirements are not restrained to just simple intercommunication operations. Information, high speed data, video and image exchange with external support forces compose vital functions, that enhance the field capabilities and survivability of the crewmembers and installation platforms. Additionally, communication systems are to be composed of several independent subsystems dedicated to a specific type of communication. As a result of this, interoperability is a key issue that allows these subsystems to work with each other. This leads to the development of new open architectures, which integrate different state of the art technologies and services into a single multifunctional system.

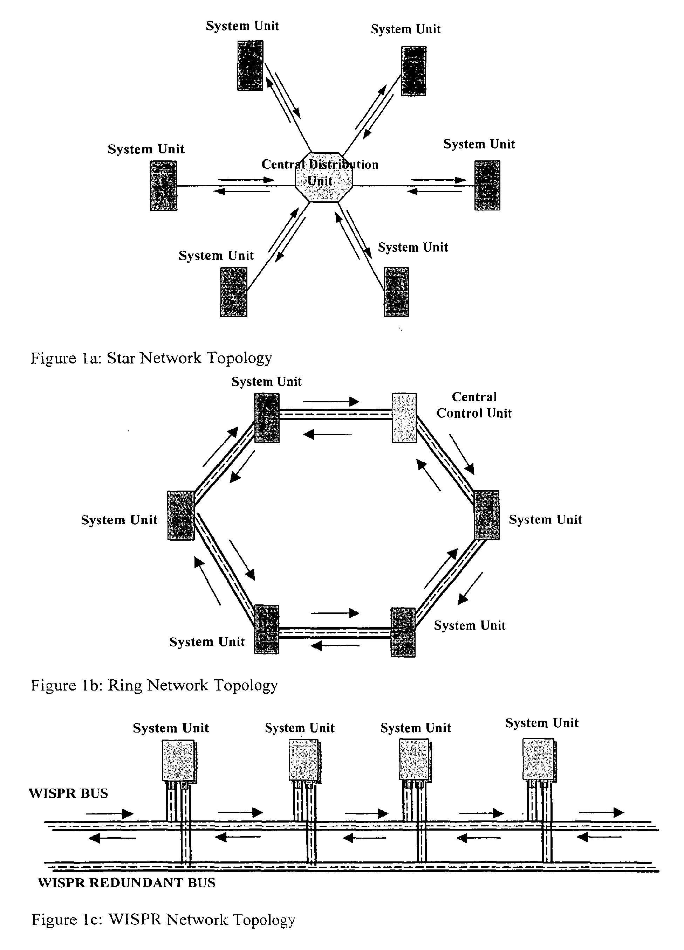

The majority of military intercommunication systems follow an architectural concept based on either ring or star topologies as depicted in figures 1a and 1b respectively. In a star topology (figure 1a) a central distribution unit, which usually includes most of the electronic circuits, is assigned with the arbitration and control of all connected system units. The same central distribution unit provides for audio and where applicable data distribution and switching to all system units via separate connections. The major disadvantage of the star topology is the existence of a single point of control and switching, which constitutes a single point of failure. A possible failure or destruction of the central distribution unit will result in a complete system shut down.

In a ring topology (figure 1b), a central control unit performs the same tasks as the equivalent star topology central distribution unit, however system unit connectivity follows a different approach. All system units are connected in series, creating a closed communication ring based on information retransmission from one unit to another. Ring topology encompasses the same drawbacks as the star topology, having no decentralization mechanism in terms of system arbitration and control.

The architecture of the WISPR system follows a new approach, which utilizes the most from "Bus" and "Star" topologies, introducing an innovative decentralization mechanism having no single point of failure, thus increasing system reliability and survivability. WISPR system provides simultaneous voice, data and control services with dynamic adaptation to modern battlefield requirements (figure 1c).

### INVENTION SUMMARY

The present invention WISPR refers to a state-of-the-art digital, fully programmable communication system that provides internal and external communication to the operators of several types of platforms (e.g. vehicles, shelters, vessels, etc.). WISPR includes a dedicated secure with anti-jamming capabilities radio in order to support a Wireless Local Area Network (WLAN) and is able to provide voice and data communication over a number of external devices such as radios, analog wires, field telephones and tank telephones.

WISPR system architecture combines "Bus" and "Star" topologies introducing an innovative dynamical assignment mechanism for central control and a dynamically distributed mechanism for arbitration and switching operations. Thus the central control mechanism in contrast with existing systems is not permanently bound to a fixed dedicated hardware unit. System HW follows the BUS architecture whereas system SW follows the STAR architecture.

In the "Bus Topology" followed by the WISPR system HW, several units are interconnected in a bus representing the infrastructure that supports the intercommunication operations. WISPR system is equipped with an additional redundant bus for improved reliability, which is automatically used in case of main system bus failure. Additionally, the redundant bus (see Figure 1c) can be used to improve data transmission bandwidth in both directions in case of increased communication requirements and/or system configuration. This architecture offers a high degree of reliability, upgradeability (independent of communication type services) as well as operational availability, while in parallel aims to support, increased system bandwidth, easier unit installation at any position of the system bus, as well as system expandability without intervention in the existing system hardware and software setup or any other kind of modifications.

WISPR system S/W features a dynamically appointed (among user terminals) central control unit, thus eliminating the possibility of a complete system failure. This is accomplished through a combination of techniques, allowing for reuse of system resources, thus resulting in exceptional system performance, even in case of unit(s) malfunction or even destruction. All units are continuously monitored and when a faulty unit is detected, this unit is isolated and an alarm is given. In this case, if the faulty unit is the commander unit, the system automatically reassigns the commander's privileges to another unit. Also due to this distributed architecture, all units can be installed in any sequence on the bus. Additionally, system architecture provides for automatic unit identification during installation regardless of unit functionality, enabling the reconfiguration of the overall system synthesis. The same applies during removal of a system unit.

The scalable architecture of the system supports connections to Field Telephones & PSTN lines (Public Telephone Network) for voice and data communication, as well as interfaces to existing LAN infrastructures in order to support data services. WISPR offers system level interoperability through standardized interfaces (i.e. Ethernet, RS-232) and can be used as an autonomous communications backbone.

The system introduces a new operational philosophy where all user terminals (Crew Control Units or CCUs) are identical and interchangeable. The distinction among user terminals in terms of access rights and operations follows the field chain of command (e.g. commander, crew) and is dynamically programmable.

The decentralized approach followed in WISPR, allows for a CCU to be dynamically appointed among the user terminals in accordance with a given operational and sequence profile. WISPR user terminals (CCU) are identical and interchangeable, as mentioned, incorporating all necessary circuitry and software for control, program and arbitration. Based on dynamic privilege assignment capability and given the authorization, any of the user terminals can realize both control and arbitration operations for a complete WISPR System, performing as the equivalent central distribution unit of a star or a ring topology.

The system SW follows a dynamically centralized approach in order to deliver the desired Quality-of-Service (QoS) for voice and data communication. The user terminal (CCU) operating in commander mode is automatically assigned with additional responsibilities and abilities, compared to the other user terminals (crew units). Furthermore, based on system reprogrammable capabilities, the commander user terminal is assigned with the management control of the overall WISPR System.

WISPR provides enhanced audio and data services through the use of service-dedicated units, all connected on the same data bus. WISPR has no limitation in terms of system configuration or unit combinations, thus enabling the setup of a communications system to fulfill all present and future operational needs of the Armed Forces. This means that the system supports integrated configuration management and the system parameters can be set without the usage of external devices. Audio and data switching is performed locally on every user terminal, thus enabling the implementation of a variety of audio and data services, according to the operational profile of each user. The latter is accomplished through the use of a redundant multi-drop bus, which creates a sharing path for voice and data exchange among users.

The voice and data services of the system provide the users with maximum flexibility in tactical communication environments. These services are assigned in predefined or programmable keys, aiming to increase flexibility and minimize their activation time. The operations of separate "listening" and "talking" are configured dynamically according to the system topology. WISPR operates in full duplex mode, allowing every crewmember to enable "talk" and "listen" functions at the same time to as many connections as available by the system. Dedicated keys on the CCU keyboard select distinct listen and talk functions.

All special services are fully programmable by the platform commander, who defines the communication modes among users (closed intercom groups, as well as the hierarchy priority plan). Additional services offered by the system, are organized in a Selection Menu to which the user has immediate access. WISPR system provides for an extended number of unique services such as:
- Short message transfers between users and over external communication interfaces
- Message status indication
- Dynamic system unit labeling
- Dynamic loudspeaker unit position identification and selection of listening channel from loudspeaker independently of unit listening operational mode
- Selective call
- Advanced routing capabilities through different communication media
- VIDEO transfer
- High-speed wireless communication with fixed and mobile users
- Hierarchy priority plan
- Complete protocol implementation and remote control of platform radios for operational parameters modification, data and voice transfer
- Radio mode operation indication at users displays (radio on - off - remote controlled)

The distinction among user terminals in terms of access rights and operations, follows the field chain of command (e.g. commander, crew) and is dynamically programmable, providing selective call capability inside the platform according to the hierarchy plan. WISPR system provides the capability of generation of dynamically programmed closed intercom groups, where the commander can program and generate closed communication groups between users of the same system according to a certain application. The commander can generate several different closed groups according to specific application requirements. A crewmember can belong to more than one closed group at the same time. The CCU via emergency key provides for the commander the capability to broadcast to all crewmembers regardless of any ongoing conversation. The emergency call is a one-way call, which overrides the communication status of the system. The same service provides for each user the capability to establish priority connection with the commander. WISPR system provides for advanced alarm data collection and distribution capabilities through audiovisual messages to all internal system users, as well as to external users via all available communication interfaces. All system units are equipped with dedicated LED indicators for power, alarm signals, network status and commander call.

WISPR features Dynamic Noise Reduction (DNR), which is performed in every single CCU by a digital signal processor and it is applied directly to the noise source. The sophisticated DNR algorithm is adaptable to the noise profiles of various platforms. The system provides for exceptional performance in terms of audio intelligibility, even when used with headsets not equipped with Active Noise Reduction (ANR) circuitry. Furthermore WISPR denoising mechanism is not dependent on reference noise acquisition microphone.

WISPR extensive interfacing capabilities provide for a variety of connections and interfaces, such as:
- Analog and digital voice services
- Data transmission through serial protocols
- Connection to LAN (Ethernet)
- Connection to radio units (e.g. HF, VHF, UHF radios)
- Connection to PSTN networks
- Connection to Field Telephones and Tank Telephones
- Connection to Terminals, Radars, Battle Management Systems etc.

An innovative feature introduced by the WISPR system is the capability of establishing a short range WLAN, based on spread spectrum technology. The WLAN infrastructure extends the system bus to a wireless one, thus adding to the capabilities of WISPR with high-speed external communications and establishing it in a manner, which allows fast deployment of a communications network in any environment. The link and the access to the WLAN is established and serviced by a dedicated transmitter and a WLAN control unit (Wireless LAN Control Unit -WLCU) respectively, which is assigned with the control and monitoring of the WLAN. The output (transmission) power of the WLCU can be adjusted by the system.

### WLCU offers:

- Independent packet voice and data communication in fixed and variable data rates, active even when "Radio Silence" to the conventional external communication systems of the platform is applied
- SMS exchange between CCU's of different platforms or from and to external users to system platforms
- Anti-jamming techniques, data encryption and high degree of transmission undetectability
- Generation of closed groups at different system platforms and/or platforms and support units
- Full remote control and access of conventional radios installed in other vehicles including unmanned vehicles
- Remote control capabilities of conventional radios from mobile users of a specific platform
- Video teleconference applications and real time and still image transfer capability
- Support of mobile users (equipped with mobile control units) for voice and data communication, video transfer and wireless control of the vehicle (platform) radios
- Transmission power level control

All of these supported operations are accessed/utilized by both local WISPR and remote users. WISPR provides for remote users the capability of utilizing all available resources in the form of services, as well as serving as a gateway in order to route their requests to other communication systems through its interfaces. This capability adds to WISPR another operational mode in addition to that of an autonomous communication system. It enables WISPR to operate as an intermediate communication node for other systems.

Furthermore, WISPR offers full interoperability with Battle Management Systems (BMS), thus providing a tactical advantage in maintaining the BMS in full operation among vehicles via the WLAN. The communication among BMS remains operational, even when "Radio Silence" is applied to the conventional external communication systems of the platform, due to the high degree of undetectability that the system provides. Furthermore, WISPR enhances the operational capabilities of any BMS, through the usage of the WLAN configuration that supports the exchange of large amounts of information among platforms in only a fraction of the time compared to the time required by conventional radios. As a result of this, BMS users are able to maintain battlefield situation awareness in near real time.

In addition, WISPR presents the following detailed mechanical and operational features:
- Easy installation and system expandability without intervention in the existing system hardware and software setup
- Ergonomically designed units
- Normal system operation even under adverse environmental conditions of temperature, humidity, shock, vibration and mechanical strain according to MIL-STD 810
- Anti-vibrating protection of all installed devices within the protected vehicle (platform)
- EMI/EMC requirements according to MIL-STD 461 and MIL-STD 462
- High reliability and maintainability

### BRIEF DESCRIPTION

Detailed diagrams for the best understanding of the functional configuration of the equipment that WISPR consists of are depicted in figures 1c, 2, 3, 4, 5 and 6.

Figure 2 illustrates a typical configuration of WISPR. In particular, it delineates all system units and how they are connected.

Figures 3, 4, 5 and 6 illustrate the main WISPR WLAN applications, such as independent LAN communications, communication with mobile units, high speed information relay and wireless remote radio control.

### DETAILED DESCRIPTION

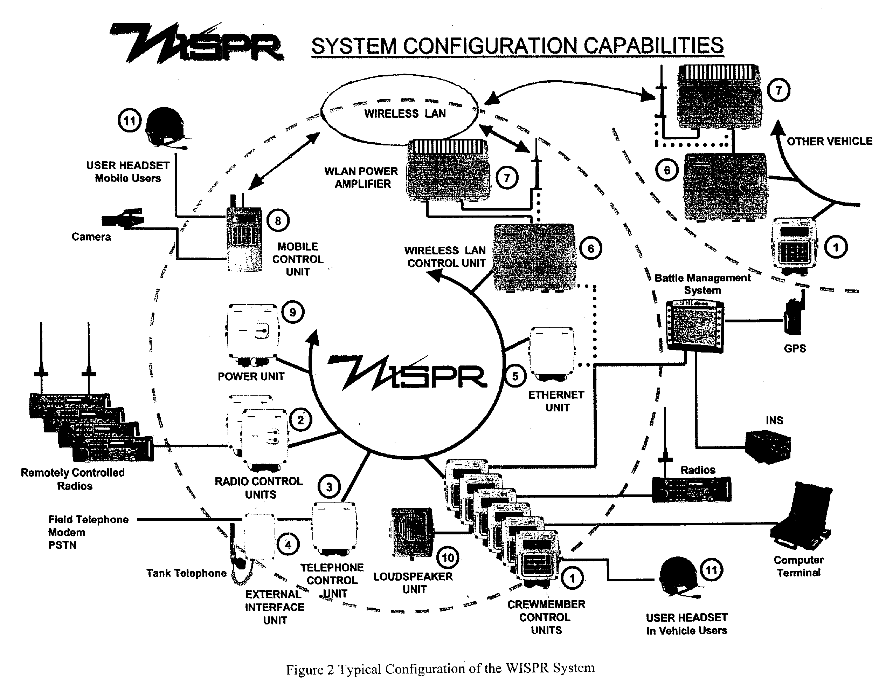

WISPR offers a complete telecommunication solution among users, incorporating voice and data services. System configuration is adaptable according to the type of platform to be equipped with and the particular operational requirements for the specific application. The present invention is described in detail using examples and with reference to figure 2. According to this invention WISPR comprises of the following operational units:
- Commander (Crewmember) Control Unit (CCU) (1)
- Radio Control Unit (RCU) (2)
- Telephone Control Unit (TCU) (3)
- External Interface Unit (EIU) (4)
- Ethernet Unit (ETU) (5)
- Wireless LAN Control Unit (WLCU) (6)
- WLAN Power Amplifier (WPA) (7)
- Mobile Control Unit (MCU) (8)
- Power Unit (PWRU) (9)
- Loudspeaker Unit (LSU) (10)
- User Headsets (HDSET) (11)

The Commander Control Unit (CCU) (1) creates the (logical) communication links among users and hosts the input / output voice devices. CCU supports two operating modes, "Commander" and "Crew". Only one CCU per system operates in "Commander" mode. This selection constitutes a dynamic process and can be executed at any time. CCU in "Commander" mode provides for the user (i.e. the commander) additional capabilities related to system administration, activation and deactivation of system services and access control to services (access to platform radios, PSTN lines, Ethernet network, etc.). CCU in "Crew" mode provides the user with complete communication services. A dedicated powerful digital signal processor utilizing a sophisticated noise reduction algorithm, performs Dynamic Noise Reduction (DNR) in the CCU and provides an adaptive noise level digital Voice Operated Switch (VOX) and Automatic Gain Control (AGC). The de-noising process is attained at the input of the audio signal and it is headset independent. Every user terminal (CCU) is equipped with an advanced and specially designed Human-Machine Interface (HMI) featuring a visual display, an illuminated command alphanumeric keyboard indicating communication status according to color code. The visual screen (Vacuum Fluorescent Display, VFD) is used for displaying messages and selections of services. The display brightness is adjustable and can be set to different levels. Dedicated keys are linked to voice services, resulting in quick access and fast activation of the most common communication operations. CCU supports a variety of external peripherals through dedicated connections, such as loudspeakers, headsets, radios etc. Additionally the unit is equipped with a serial interface to support a PC connection. The unit is connected to the system bus.

The Radio Control Unit (RCU) (2) provides for full access and remote control of the radios attached to the system, thus eliminating the need for physical access to the radios. Each unit is capable of controlling two radios. The communication access to the radios is controlled and enabled by the commander CCU. The RCU is a programmable and fully microprocessor controlled unit. The unit is connected to the system bus and it also provides a connection to a Personal Computer (PC). RCU is equipped with two LEDs supporting two operational states namely a) "Operational" (PWR LED on), which indicates that the unit is on and b) "Connection" (NET LED on), which indicates connection with the system bus.

The Telephone Control Unit (TCU) (3) provides for a tank telephone, a field telephone and two PSTN connections. The unit allows the WISPR system to be connected to external lines in order to support voice and data transfer, as well as, connections to a public telephone network (PSTN). When the TCU is connected to the WISPR system, authorized users are able to establish calls from/to a PSTN network through the use of the CCU keyboard. TCU provides WISPR with the flexibility to support various ways of data transfer, which are defined according to the operational needs for tactical communications. Field telephone users can be allowed to use platform radios, if they enter a preprogrammed access code in the field telephone panel. The TCU is a programmable and fully microprocessor controlled unit, connected to the system bus. The commander CCU activates and controls the TCU automatically.

The External Interface Unit (EIU) (4) is connected to the TCU and is installed outside the vehicle (in the relevant protective case), providing easy access to the telephone network. Furthermore, it provides also wired voice communication with the interior of the vehicle and consequently with other equipment attached to the WISPR system (e.g. radio equipment). EIU provides the interfaces to a field telephone, two PSTN lines, a user handset and a headset connection. EIU provides internal call LED indicator, volume control buttons and intercom /radio communication selection switch.

The Ethernet Unit (ETU) (5) supports a 10/100Base-T auto-negotiated Ethernet connection. This unit allows for the WISPR system to be connected to external LANs in order to support high-speed data transfer. The unit also supports a serial PC connection. The ETU is a programmable and fully microprocessor controlled unit, connected to the system bus. The commander CCU activates and controls the ETU automatically.

The WLAN Control Unit (WLCU) (6) which constitutes the dedicated radio unit of the WISPR system, is used as a gateway to interconnect independent networks in environments where a high-speed telecommunications infrastructure is required. The operation of the networks is self-contained and self-governed in order not to affect the communication connections. The commander CCU activates and controls the Wireless LAN Control Unit (WLCU) automatically, granting access to the WLAN and connecting neighboring WISPR systems. The communication link supports voice communication and has the capability to recognize automatically the WLAN infrastructure. Furthermore WLCU supports bi-directional data exchange among units in a WLAN. This service is supported either between different WISPR systems (i.e. vehicles) or between a WISPR system (i.e. vehicle) and a MCU mobile user (i.e. out of vehicle crew member).
WLCU supports the exchange of SMS messages between CCUs of different platforms. The Wireless Network services this application transparently. The recipient of the SMS message can be a number of specific CCUs of the destination WISPR system. The system is capable of setting up a wireless communication group between WLAN equipped WISPR platforms or capable of establishing a point-to-point connection with another WISPR system via the WLAN interface.
Additionally, in the event of failure of the VHF Radios of a WLAN equipped platform, WISPR system provides for remote access and control of a VHF Radio located on another WLAN equipped platform, thus re-establishing long distance communications.

WLAN supports emergency one way outgoing calls from the Commander CCU. The emergency call is being received by all WLAN equipped platforms participating in the Local Wireless Network (broadcast transmission).
The WLCU is a programmable and fully microprocessor controlled unit and is connected to the system bus. The unit is equipped with an Ethernet port providing connection to external LANs and serial RS 232 interface for PC connection. Indication LEDs notify about power errors and network connection.

The WLAN Power Amplifier (WPA) (7) provides extended range of communication for the WLCU. This bi-directional RF power amplifier consists of two main amplification parts. The amplification part is responsible for transmission coupling and guiding the signal to the antenna and the receiver amplification part is responsible for guiding the received signal to the WLCU demodulation and digital processing circuits. The unit incorporates EMI and VSWR protection. WPA has two external SMA connectors for connection with the antennas and a SMA connector for RF connection with the WLCU. Indication LEDs notify about power errors and high Voltage Standing Wave Radio (VSWR).

The Mobile Control Unit (MCU) (8) is the WISPR mobile communication unit powered by a rechargeable battery pack. It provides the capability for wireless communication between mobile and stationary WISPR users. MCU supports bi-directional voice and data transfer, while it keeps all the advantages of an ergonomically designed hand held device. The MCU user is able to access remotely and control the conventional radios (e.g. HF, VHF, UHF radios) attached to a Wireless LAN equipped platform. The unit is crash & vibration proof and water & dust proof and is equipped with a display, a keypad and a flexible external antenna.

The Power Unit (PWRU) (9) is a power protection and filtering unit for the WISPR system, which is connected with the available power supply sockets of the vehicle and the bus on which all the system units are interconnected providing power to all attached WISPR units. PWRU incorporates all necessary protection circuitry against input voltage variations, spikes, short circuits etc. The power LED shows the unit operational condition. It has two states indicating:
a) normal operation (yellow) and
b) failure of power consumption (off)

The Loudspeaker Unit (LSU) (10) is an active loudspeaker unit. It consists of a power supply, an audio amplifier and a volume control circuit. The unit accepts the analog (electrical) voice signal from CCU and reproduces it acoustically. The LSU incorporates a special Power Supply Unit.

The User Headset (HDSET) (11) is a standard CVC helmet without Active Noise Reduction (ANR) and is connected to the audio connector of the CCU. Furthermore the WISPR system can be connected to any standard CVC type helmet or headset, subject to specific requirements. WISPR also supports headsets equipped with ANR circuitry and electret type microphones, providing power through the audio connector. However it must be noted that ANR type headsets are not solely required for WISPR, since de-noising is implemented internally in the CCU.

External connectors in all the above described WISPR units meet military standards for all the devices intended to be interconnected alternatively, fulfilling in this way an improved reliability, environmental resistance and conforming to all the necessary requirements for EMI/EMC.

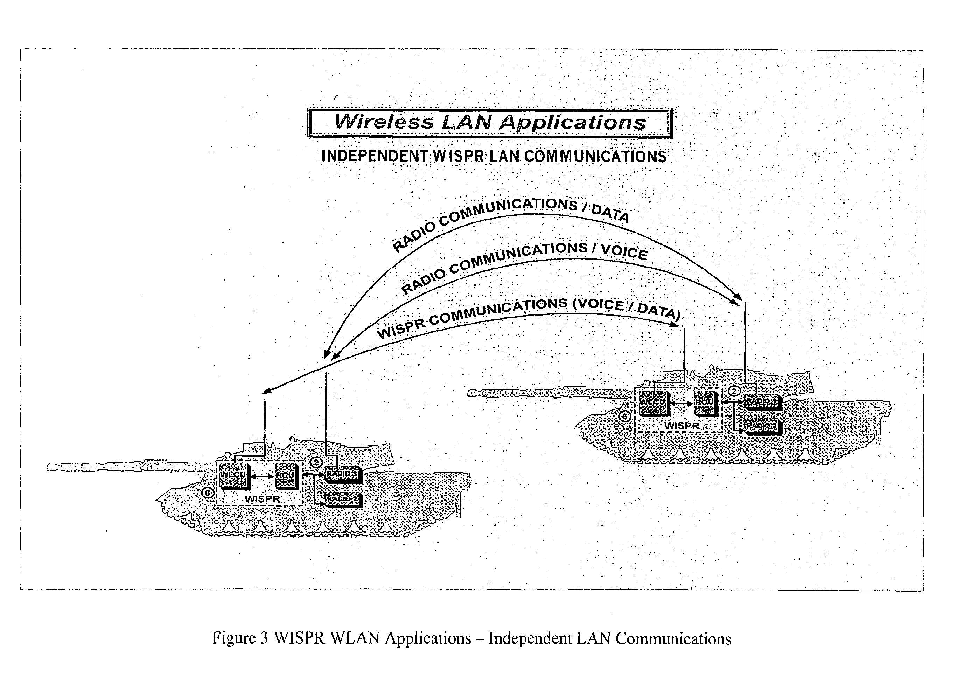

Figure 3 illustrates wireless communication between separate WISPR installation platforms (shown as battle tanks in this figure). This communication (voice and data) can be performed by either using the combat net radios of the vehicle or by using the dedicated radio unit (WLCU) of the WISPR. This radio offers link security (anti-jamming capability using spread spectrum technology), information security, very low detection probability and IP based communications.

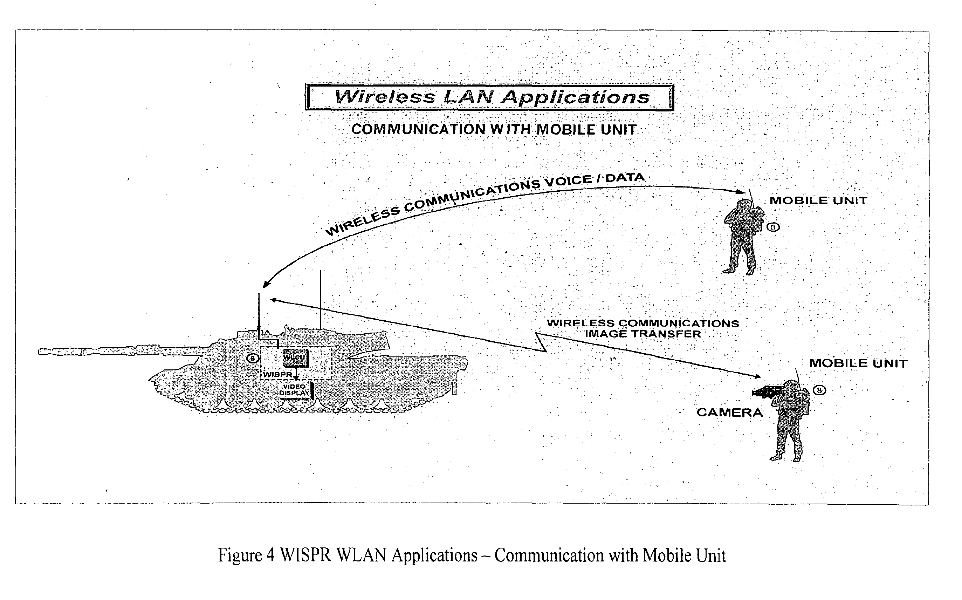

In figure 4 communication between a WISPR installation platform (shown as battle tank in this figure) and mobile units is shown, using the dedicated WISPR radios. With this capability a mobile user can communicate securely and undetected with any WISPR installation platform in order to send high rate data (e.g. video image transfer). In voice or data mode the mobile user can perform broadcast, multicast or selective call.

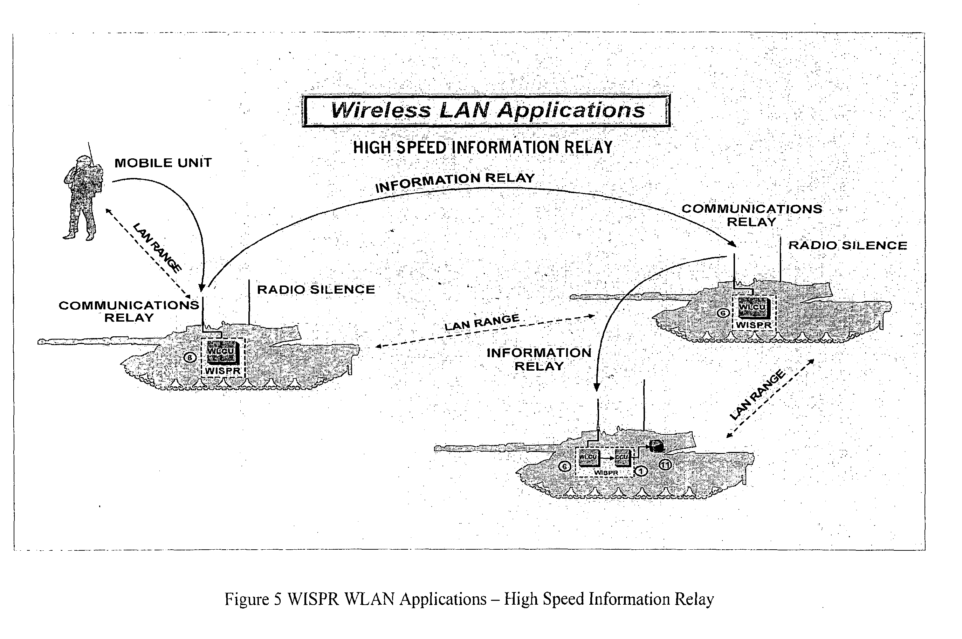

Figure 5 demonstrates the high-speed relay information functionality. When two WISPR installation platforms or mobile users are not in the range that the WISPR WLAN supports, then they have the capability to communicate (voice or data) with each other using another WISPR system as a radio relay station, which provides routing and the necessary QoS in order to support voice and data communication.

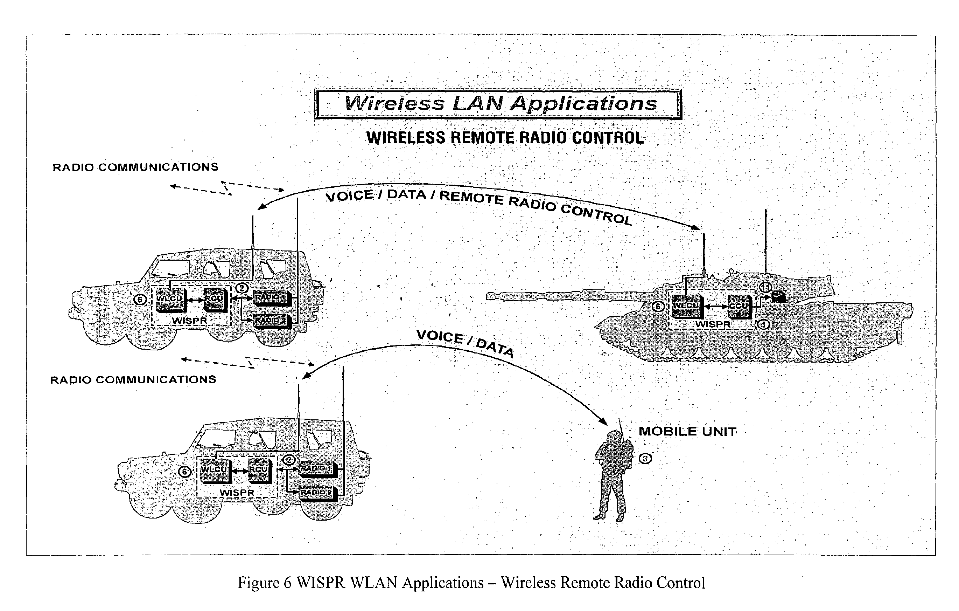

Finally in figure 6 the wireless remote radio control is illustrated. The WISPR system using its own dedicated radios is capable of full remote control of combat net radios that are installed in other platforms (manned or unmanned). The wireless remote radio control can be performed either through the WLCU unit or through the mobile unit.

## Claims

1. WISPR system for the internal and external communications of any kind of vehicle or other platforms (e.g. shelters, vessels) including: a) a dedicated radio providing an external wireless network capable of supporting digital communication secretly and with Low Probability of Detection (LPD) between installation platforms and dedicated portable radios carried by mobile users b) enhanced voice services using advanced noise reduction algorithms c) real time static image transfer, video and high data rate transfer capability d) wired and wireless remote control of combat net radios e) routing capabilities between all supported interfaces f) special operational services g) interfaces to combat net radios, PSTN networks, field and tank telephones h) interface to any kind of terminal (e.g. computer, radar, Battle Management Systems) through Ethernet, wireless or serial port connections i) bus topology architecture j) power supply filtering.

2. WISPR system as in claim 1 wherein said radio provides exclusive point to point (selective call) or point to multi-point (broadcast or multicast) communication connections (voice and high data rate) among installation platforms, said radio provides spread-spectrum anti-jamming techniques, data encryption, transmission power level control and high degree of transmission undetectability, said system provides extended range of communication to the WLAN with the usage of a dedicated power amplifier. Said system supports independent voice and high-speed data communications and video transfer capability, all active even under "combat net radio silence".

3. WISPR system as in claims 1 through 2 wherein said system provides dynamic identification of the unit loudspeaker is connected and selection of listening channel from loudspeaker independently of unit listening operational mode, said system provides separate "listening" and "talking" functions dynamically configured according to system topology.

4. WISPR system as in claims 1 through 3 wherein said system is capable of creating network bridges / routers / communication paths for wired and wireless networks taking the form of a repeater, controller or participant, said system is capable of full remote control and access of combat net radios installed in other manned and unmanned platforms (wireless remote control) for operational parameters modification, data and voice transfer, said system provides SMS exchange between inside platform system users and/or between different platform users through external communication interfaces.

5. WISPR system as in claims 1 through 4 wherein said system includes very clear voice services using an adaptive electronic Dynamic Noise Reduction (DNR) algorithm that is adaptable to the noise profiles of various platforms and it is performed in every single CCU by a digital signal processor, said system DNR algorithm is applied directly to noise source and it is interoperable with any type of headset dependently on reference noise acquisition, said system provides noise level adaptive digital VOX (Voice Operated Switch) and Automatic Gain Control (AGC), both implemented algorithmically by digital signal processing.

6. WISPR system as in claims 1 through 5 wherein said system supports many special and dynamically field programmable services such as closed groups, short message transfer between users and over radio, hierarchy plan, radio remote control, wireless conference groups with members private data.

7. WISPR system as in claims 1 through 6 wherein said system provides dedicated operation keys on the CCU keyboard as well as a smart illuminated keyboard indicating communication status according to color code, said system units are equipped with dedicated LED indicators for power, alarm signals, network status and commander call operation.

8. WISPR system as in claims 1 through 7 wherein said system provides the capability of continuous system fault monitoring, faulty unit automatic isolation and alarm indication, said system provides advanced alarm data collection and distribution capabilities through audiovisual messages to all internal system users as well as to external users via all available communication interfaces.

9. WISPR system as in claims 1 through 8 wherein said system architecture offers a high degree of reliability, upgradeability (independent of communication type services) as well as operational availability, said system is equipped with additional redundant bus for improved system reliability, said system provides a redundant bus used to improve data transmission bandwidth in both directions in case of increased communication requirements and/or system configuration (e.g. number of CCUs installed at the same platform), said system provides full duplex operational mode, said system can be expanded without intervention in the existing system hardware and software setup.

10. WISPR system as in claims 1 through 9 wherein said system provides sequence independent unit installation on the bus, said system architecture provides automatic unit identification during installation or unit removal, automatically reconfiguring the overall system synthesis, said Bus topology is used without static central switching device, using distributed circuit-switching technology, said system provides automatic reassignment of commander privileges to another unit in case of a primary commander unit failure.

11. WISPR system as in claims 1 through 10 wherein said system supports emergency key operations providing the system Commander with the capability to broadcast to all crewmembers, regardless of any ongoing conversation, said system supports emergency key operations providing each user with the capability to establish priority connection with the Commander.

12. WISPR system as in claims 1 through 11 wherein said system supports integrated configuration management, dynamic system unit labeling and system parameter setup without the need for external devices.

13. WISPR system as in claims 1 through 12 wherein said system provides full interoperability with Battle Management Systems (BMS).

14. WISPR system as in claims 1 through 13 wherein said system operates under adverse environmental conditions of temperature, humidity, shock, vibration and mechanical strain according to MIL-STD 810, said system complies with the EMI/EMC requirements according to MIL-STD 461 and MIL-STD 462.

15. A Wideband Intercom and Secure Packet Radio system, which includes a variety of systems according to any of the claims from 1 to 14.
